## Europäisches Patentamt
## European Patent Office
## Office européen des brevets

(11) Veröffentlichungsnummer: **0 205 733**
**B1**

(12) **EUROPÄISCHE PATENTSCHRIFT**

(45) Veröffentlichungstag der Patentschrift:
18.10.89

(51) Int. Cl.⁴: **F 16 B 41/00, F 16 B 39/02**

(21) Anmeldenummer: **86101326.6**

(22) Anmeldetag: **01.02.86**

(54) Schraubverbindung.

(30) Priorität: **30.05.85 CH 2286/85**

(43) Veröffentlichungstag der Anmeldung:
**30.12.86 Patentblatt 86/52**

(45) Bekanntmachung des Hinweises auf die Patenterteilung:
**18.10.89 Patentblatt 89/42**

(84) Benannte Vertragsstaaten:
**DE FR GB IT SE**

(56) Entgegenhaltungen:
**GB-A- 124 139**
**GB-A- 2 053 403**
**GB-A- 2 066 402**

(73) Patentinhaber: **GEBRÜDER SULZER AKTIENGESELLSCHAFT, Zürcherstrasse 9, CH-8401 Winterthur (CH)**

(72) Erfinder: **Lauer, Fredy, Im Gassenacker 10 Sulz, CH-8544 Rickenbach-Attikon (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf 1 (DE)**

ACTORUM AG

## Beschreibung

Die Erfindung betrifft eine Schraubverbindung mit den Merkmalen des Oberbegriffs des Anspruchs 1.

Eine solche Schraubverbindung ist aus der GB-A-2 066 402 bekannt. Um ein unbeabsichtigtes Lösen der Schraubverbindung zu verhindern, bestehen die Mittel aus einem Vierkant oder einem Schlitz an dem dem Bolzen abgewendeten Ende des Bolzenteils. Nach dem gemeinsamen Einschrauben von Bolzen und Bolzenteil in das Innengewinde aufweisende Bauteil wird mit einem passenden Werkzeug, z.B. einem Steckschlüssel beim Vierkant oder einem Schraubenzieher beim Schlitz, der Bolzenteil aus dem Bolzen soweit herausgeschraubt, dass sich dieser relativ zum Bolzenteil im Innengewinde des Bauteils verspannt. Damit ist ein ungewolltes Herausdrehen des Bolzens aus dem Bauteil verhindert. Bei einem gewollten Herausdrehen des Bolzens muss also der Bolzenteil wieder in den Bolzen zurückgeschraubt werden, so dass die gegenseitige Verspannung aufgehoben wird.

Nachteilig bei dieser Schraubverbindung ist, dass ein besonderes Werkzeug zu Hilfe genommen werden muss, um die Relativbewegung zwischen dem Bolzen und dem Bolzenteil herbeizuführen, wodurch die gegenseitige Verspannung erreicht wird. Die Verwendung eines solchen Werkzeuges setzt überdies voraus, dass die Schraubverbindung von der Rückseite her zugänglich ist. Es muss also ausreichender Platz für das Werkzeug vorhanden sein.

Der Erfindung liegt die Aufgabe zugrunde, die Schraubverbindung der eingangs genannten Art so zu verbessern, dass ein unbeabsichtigtes Lösen der Schraubverbindung auch ohne Verwendung eines besonderen Werkzeuges sicher vermieden ist.

Diese Aufgabe wird erfindungsgemäss durch die Merkmale des kennzeichnenden Teils des Anspruchs 1 gelöst. Durch das Anbringen einer zwischen dem Bolzen und dem Bolzenteil wirkenden Feder wird erreicht, dass sich beim gemeinsamen Einschrauben vom Bolzen und Bolzenteil diese selbsttätig so zueinander einstellen, dass trotz des freien Zwischenraums der Übergang vom Aussengewinde des Bolzenteils zu dem des Bolzens kontinuierlich ist; der Einschraubvorgang ist also unbehindert. Sowie eine umgekehrte Drehbewegung versucht wird, bewegt die Feder den Bolzen und den Bolzenteil gegeneinander, so dass der Zwischenraum aufgehoben wird und der Übergang des Aussengewindes des Bolzenteils zu dem des Bolzens versetzt wird; der Verlauf des Aussengewindes ist also an der Trennstelle diskontinuierlich und Bolzen und Bolzenteil sind gegen ein Herausdrehen gesperrt. Damit ist eine selbsttätige Sicherung gegen ein ungewolltes Lösen der Schraubverbindung erreicht. Mit der neuen Schraubverbindung wird also das Montieren der Bolzen ausserordentlich vereinfacht, ohne dass noch zusätzliches Werkzeug verwendet werden müsste. Die erfindungsgemässe Schraubverbindung lässt sich ausser für die schon erwähnten Zentrierbolzen von Brennelementen auch für Justierungszwecke (Nivellierung von Waagen) oder Positionierungszwecke (Aufstellung von zu bearbeitenden Werkstücken auf Werkzeugmaschinen) verwenden.

Einige Ausführungsbeispiele der Erfindung werden in der folgenden Beschreibung anhand der Zeichnung näher erläutert. Es zeigen:

Fig. 1 einen Axialschnitt durch eine Schraubverbindung nach der Erfindung,

Fig. 2 einen Querschnitt entsprechend der Linie II-II in Fig. 1,

Fig. 3 einen der Fig. 2 entsprechenden Querschnitt durch eine abgewandelte Ausführungsform,

Fig. 4 einen der Fig. 2 entsprechenden Querschnitt durch eine weitere Ausführungsform,

Fig. 5 einen Axialschnitt der Ausführungsform nach Fig. 4 im Bereich der Trennstelle zwischen dem Bolzen und dem Bolzenteil,

Fig. 6 einen Axialschnitt durch eine weitere Ausführungsform der Schraubverbindung,

Fig. 7 eine perspektivische Teilansicht eines nuklearen Brennelementes und

Fig. 8 einen Axialschnitt einer Schraubverbindung im Zusammenhang mit dem Brennelement nach Fig. 7.

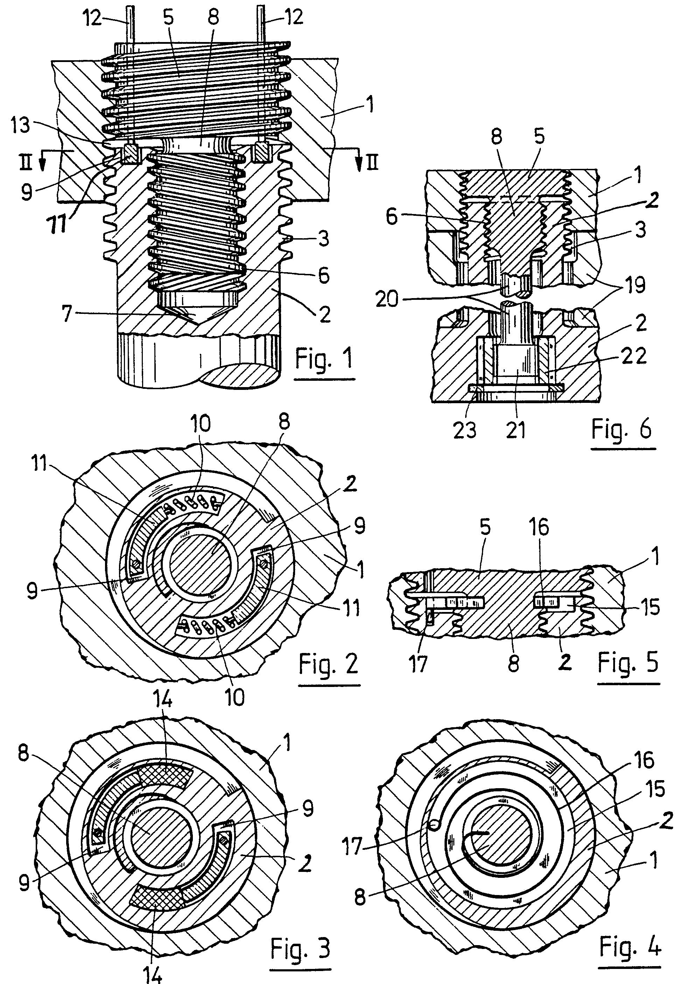

In Fig. 1 ist mit 1 ein ein Innengewinde aufweisender Bauteil bezeichnet, in den ein Bolzen 2 eingeschraubt ist, der an seinem in Fig. 1 oberen Ende mit einem zum Innengewinde des Bauteils 1 passenden Aussengewinde 3 versehen ist. Der Bolzen 2 weist im Bereich des Gewindes 3 einen von ihm getrennten Bolzenteil 5 auf, der über ein weiteres Gewinde 6 mit dem Bolzen 2 verbunden ist. Zu diesem Zweck weist der Bolzen 2 ein in seiner Längsrichtung verlaufendes Sackloch 7 mit Innengewinde auf, in das ein das Gewinde 6 aufweisender Ansatz 8 des Teils 5 eingeschraubt ist. Während das Gewinde 3 rechtsgängig gewunden ist, ist das Gewinde 6 linksgängig gewunden. In der Stirnfläche des Bolzens 2 sind zwei ringsektorartige Vertiefungen 9 vorgesehen, in denen je eine Schraubenfeder 10 untergebracht ist (Fig. 2). Jede der beiden Federn 10 stützt sich mit einem Ende an einer Endfläche der Vertiefung 9 ab und mit dem anderen Ende an einem Anschlagkörper 11, der sich ebenfalls in der Vertiefung 9 befindet und jeweils über einen sich im Bolzenteil 5 parallel zur Längsrichtung des Bolzens erstreckenden Stift 12 mit dem Bolzenteil 5 kraftschlüssig verbunden ist.

Die Schraubverbindung nach Fig. 1 und 2 funktioniert wie folgt. Beim Einschrauben des Bolzens 2 in den Bauteil 1 fassen zuerst die Gewindegänge des Bolzenteils 5. Wenn die Trennstelle zwischen dem Bolzen 2 und dem Bolzenteil 5 in das Innengewinde des Bauteils 1 eintritt, stellen sich die beiden Bolzenteile 2 und 5 so zueinander ein, dass sich zwischen ihnen ein Zwischenraum 13 ergibt, wodurch der Verlauf des Gewindes 3 vom Bolzen 2 zum Bolzenteil 5 sich kontinuierlich fortsetzt, was bei der Darstellung in Fig. 1 der Fall ist. Der so gebildete Zwischenraum 13 wird durch eine Bewegung des Gewindes 6 gegen die Kraft der Federn 10 beim weiteren Einschrauben des Bolzens aufrechterhalten. Beim Versuch, den Bolzen 2 aus dem Bauteil 1 herauszudrehen, bewegen sich, zusätzlich unterstützt von den Federn 10, der Bolzen 2 und der Bolzenteil 5 gegeneinander, so dass der Zwischenraum 13 im wesentlichen aufgehoben wird. Dadurch wird der kontinuierliche Verlauf des Aussengewindes 3 an der Trennstelle unstetig und ein Drehen des Bolzens im Sinne des Herausschraubens ist verhindert. Ein selbsttätiges Lösen der Schraubverbindung zwischen dem Bauteil 1 und dem Bolzen 2 ist damit ausgeschlossen. Wenn es die Verwendung der Schraubverbindung erfordert, diese zu lösen, so ist dies dadurch möglich, dass man durch Drehen des Bolzenteils 5 an den herausragenden Stiften 12 den Zwischenraum 13 wiederherstellt und unter Aufrechterhaltung dieses Zwischenraumes den Bolzen 2 herausschraubt. Normalerweise wird man die Stifte 12 nicht aus dem Bolzenteil 5 herausragen lassen, sondern innerhalb des Bolzenteils 5 enden lassen. Zum Wiederherstellen des Zwischenraumes 13 beim gewollten Lösen der Verbindung benutzt man dann ein Werkzeug, das in den Löchern für die Stifte 12 angreift.

Das Ausführungsbeispiel nach Fig. 3 ist gleich aufgebaut wie das nach Fig. 1 und 2, nur dass anstelle der Schraubenfedern 10 elastisch verformbare Gummikörper 14 in die Vertiefungen 9 eingelassen sind.

Beim Ausführungsbeispiel nach Fig. 4 und 5 ist anstelle der beiden Vertiefungen 9 eine durchgehende kreisförmige Vertiefung 15 im Bolzen 2 vorgesehen und anstelle der Federn 10 ist eine Spiralfeder 16 in der Vertiefung angeordnet. Die Spiralfeder 16 ist mit ihrem inneren Ende am Ansatz 8 des Bolzenteils 5 befestigt und mit ihrem anderen Ende an einem Stift 17, der am äusseren Umfang der Vertiefung 15 im Bolzen 2 befestigt ist.

Die Wirkungsweise der Ausführungsformen nach Fig. 3 bis 5 ist gleich der zu Fig. 1 und 2 beschriebenen.

Gemäss Fig. 6 ist der Bolzen 2 nach Art einer Kopfschraube ausgebildet und der Bauteil 1 als Mutter, wobei zwischen dem Kopf des Bolzens 2 und der Mutter 1 ein Bauteil 19 eingespannt ist. Vom Bolzen 2 ist wiederum im Bereich des Aussengewindes 3 in ein Bolzenteil 5 mit Ansatz 8 abgetrennt. Der Bolzen 2 ist durchgehend hohl ausgebildet, wogegen der Bolzenteil 5 anschliessend an das weitere Gewinde 6 des Ansatzes 8 einen Torsionsstab 20 aufweist, der sich durch das durchgehende Loch des Bolzens 2 bis in den Bereich des Bolzenkopfes erstreckt. Das freie, in Fig. 6 untere Ende 21 des Torsionsstabes 20 ist etwas verdickt ausgebildet und mit einer in Richtung der Bolzenachse verlaufenden Verzahnung versehen, in die die innere Verzahnung einer über das verdickte Ende 21 gesteckten Büchse 22 eingreift. Die Büchse 22 weist ausserdem eine äussere, ebenfalls in Axialrichtung verlaufende Verzahnung auf, die mit einer entsprechenden Verzahnung im Kopf des Bolzens 2 zusammenwirkt. Die Büchse 22 ist durch einen Sicherungsring 23 gegen Herausfallen aus dem Kopf des Bolzens 2 gesichert. Zwischen der Verzahnung des verdickten Endes 21 und der mit ihr zusammenwirkenden Verzahnung der Büchse 22 ist etwas Spiel vorhanden, das die Relativbewegung an der Trennstelle zwischen dem Bolzen 2 und dem Bolzenteil 5 ermöglicht.

Auch bei diesem Ausführungsbeispiel lässt sich der Bolzen 2 unbehindert in die Mutter 1 einschrauben, wobei sich zwischen den Bolzenteilen 2 und 5 an deren Trennstelle ein dem Zwischenraum 13 in Fig. 1 entsprechender Zwischenraum einstellt und sich der Torsionsstab 20 etwas entspannt. Beim Nachlassen der Einschraubkraft wird infolge der Vorspannung des Torsionsstabes 20 der erwähnte Zwischenraum zwischen dem Bolzen 2 und dem Bolzenteil 5 im wesentlichen aufgehoben und damit an der Trennstelle die Unstetigkeit im Verlauf des Aussengewindes 3 erzielt, die ein unbeabsichtigtes Lösen der Schraubverbindung verhindert. Ein beabsichtigtes Lösen der Schraubverbindung ist dagegen möglich, indem mit einem passenden Werkzeug der Torsionsstab 20 im entspannenden Sinne soweit gedreht wird, dass der Zwischenraum an der Trennstelle zwischen dem Bolzen 2 und dem Bolzenteil 5 wieder entsteht und wieder ein kontinuierlicher Gewindeverlauf des Aussengewindes 3 besteht, so dass unter Aufrechterhaltung dieses Zwischenraumes der Bolzen 2 aus der Mutter 1 herausgedreht werden kann.

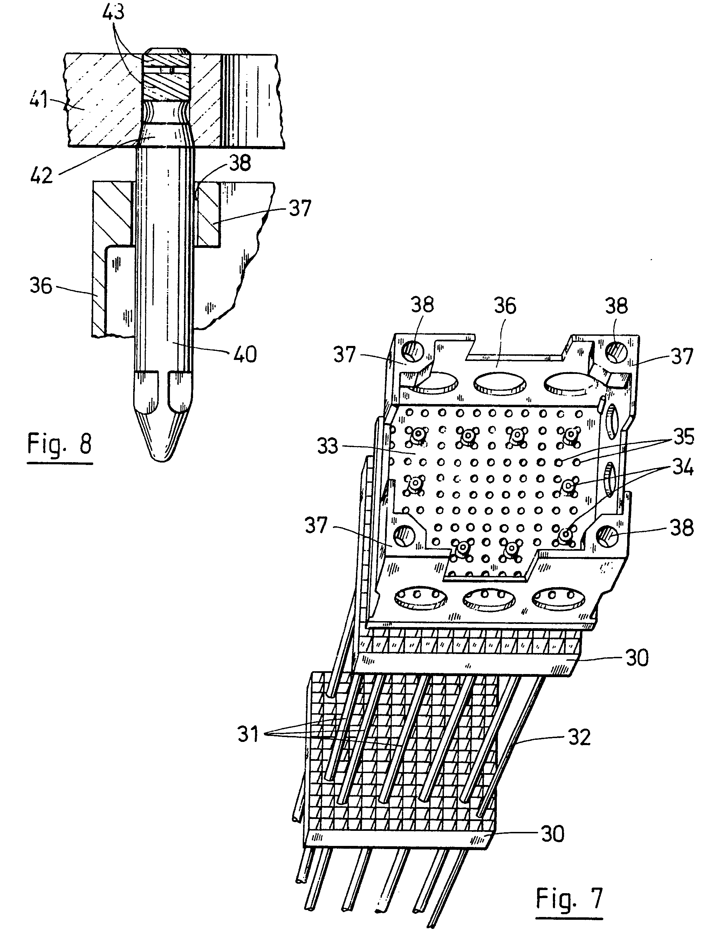

Beim nuklearen Brennelement nach Fig. 7, die nur den obersten Teil des Elementes zeigt, sind in vertikaler Richtung übereinander zwei Abstandshaltegitter 30 vorgesehen sowie mehrere sich durch die Gitter hindurch erstreckende Regelstabführungsrohre 31. Ausser diesen Rohren erstrecken sich durch die Abstandshaltegitter auch Brennstäbe 32, von denen in Fig. 7 nur einer dargestellt ist. Die Führungsrohre 31 sind an ihrem oberen Ende an einer Kopfplatte 33 angeschlossen, die ausser den Anschlussstellen 34 Löcher 35 aufweist, die für den Kühlmitteldurchtritt an den Brennstäben dienen. Die viereckige Kopfplatte 33 ist an ihrem Rand mit einem vertikalen Kragen 36 versehen, der an seinem oberen Rand in den vier Ecken je einen nach innen ragenden Flansch 37 aufweist. Jeder Flansch 37 ist mit einer vertikal gerichteten Führungsbohrung 38 versehen. In jeweils zwei einander diagonal gegenüberliegenden Führungsbohrungen 38 eines Brennelementes ragt von oben her ein Zentrierbolzen 40 (Fig. 8), der mit seinem oberen Ende in eine Gitterplatte 41 eingeschraubt ist. Das obere Ende des Zentrierbolzens 40 weist das Aussengewinde 43 auf, wie zu Fig. 1 und 2 beschrieben, in dessen Bereich ein Bolzenteil vom Bolzen 40 abgetrennt ist, während das Innengewinde in der Gitterplatte 41 dem des Bauteils 1 in Fig. 1 entspricht. Die Zentrierbolzen 40 werden also in die Gitterplatte eingeschraubt, bis der kegelige Übergangsabschnitt 42 im entsprechend geformten Bohrungsabschnitt der Gitterplatte anliegt, woraufhin sich die Schraubverbindung der Zentrierbolzen 40 nicht mehr ungewollt lösen kann. Mit Hilfe der Gitterplatte 41 werden die Brennelemente im Kern eines Druckwasserreaktors in Position gehalten.

Abweichend von den beschriebenen Ausführungsbeispielen nach Fig. 1 bis 5 ist es auch möglich, den Bolzen 2 mit einem das weitere Gewinde 6 tragenden Ansatz zu versehen, der in ein entsprechendes Gewindeloch des Bolzenteils 5 eingeschraubt ist. Weiter ist es möglich, die Schraubenfedern 10 bzw. die Gummikörper 14 durch hermetisch geschlossene Gummikissen zu ersetzen, die mit Luft oder Wasser gefüllt sind.

## Patentansprüche

1. Schraubverbindung zwischen einem ein Aussengewinde (3) aufweisenden Bolzen (2) und einem ein entsprechendes Innengewinde aufweisenden-Bauteil (1), vorzugsweise für Zentrierbolzen von nuklearen Brennelementen, wobei vom Bolzen (2) im Bereich des Aussengewindes (3) quer zu seiner Längsachse ein Bolzenteil (5) abgetrennt ist, der mit dem Bolzen (2) über ein weiteres Gewinde (6), Relativbewegungen zwischen dem Bolzen (2) und dem Bolzenteil (5) zulassend, verbunden ist, und wobei am Bolzenteil (5) wirkende Mittel vorgesehen sind, die beim Einschrauben des Bolzens (2) in den Bauteil (1) eine solche Relativbewegung zulassen, dass der Gewindeverlauf des Aussengewindes (3) an der Trennstelle kontinuierlich ist, und die ein Herausschrauben des Bolzens aus dem Bauteil (1) sperren, da infolge einer entgegengesetzten Relativbewegung der Gewindeverlauf des Aussengewindes (3) an der Trennstelle diskontinuierlich ist, dadurch gekennzeichnet, dass die Mittel aus mindestens einer zwischen dem Bolzen (2) und dem Bolzenteil (5) umfangsmässig wirkenden Feder (10, 14, 16, 20) bestehen und dass die Trennstelle zwischen dem Bolzen (2) und dem Bolzenteil (5) so ausgebildet ist und die Feder so angeordnet ist, dass beim Einschrauben des Bolzens (2) zwischen diesem und dem Bolzenteil (5) an der Trennstelle ein freier Zwischenraum (13) besteht, der bei einem Herausschrauben im wesentlichen aufgehoben ist.

2. Verbindung nach Anspruch 1, dadurch gekennzeichnet, dass das weitere Gewinde (6) entgegengesetzten Windungssinn aufweist wie das Aussengewinde (3).

3. Verbindung nach Anspruch 1, dadurch gekennzeichnet, dass das weitere Gewinde (6) den gleichen Windungssinn wie das Aussengewinde (3), jedoch unterschiedliche Steigung aufweist.

4. Verbindung nach einem der Ansprüche 1 bis 3, dadurch gekennzeichnet, dass der Bolzen (2) in seiner Längsrichtung ein Sackloch (7) aufweist, in das das weitere Gewinde (6) eingeschnitten ist, und dass der Bolzenteil (5) mit einem dazu passenden Gewindeansatz (8) versehen ist.

5. Verbindung nach einem der Ansprüche 1 bis 3, dadurch gekennzeichnet, dass der Bolzen (2) in seiner Längsrichtung mit einem durchgehenden Loch versehen ist und an dem dem Bolzenteil (5) benachbarten Ende des Loches das weitere Gewinde (6) eingeschnitten ist und dass der Bolzenteil (5) mit einem dazu passenden Gewindeansatz (8) versehen ist, an den sich als Feder ein durch das Loch erstreckender Torsionsstab (20) anschliesst, der an seinem freien Ende (21) über eine Spiel aufweisende Axialverzahnung mit dem Bolzen (2) verbunden ist.

Claims

1. Screw connection between a bolt (2) having an external thread (3) and a structural element (1) having a corresponding internal thread, preferably for use with nuclear fuel element centring bolts, wherein a bolt portion (5) is divided from the bolt (2) in the region of the external thread (3) transverse to its longitudinal axis, said bolt portion (5) being joined to the bolt (2) by means of an additional thread (6) permitting relative movements between the bolt (2) and the bolt portion (5), and wherein means operating on the bolt portion (5) are provided which permit a relative movement when the bolt (2) is screwed into the structural element (1) such that the thread profile of the external thread (3) is continuous at the dividing point, and which means lock the bolt against being unscrewed from the structural element (1) because a relative movement in the opposite direction makes the profile of the external thread (3) discontinuous at the dividing point, characterised in that the means comprise at least one spring (10, 14, 16, 20) operating circumferentially between the bolt (2) and bolt portion (5) and that the dividing point between the bolt (2) and the bolt portion (5) is so constructed and the spring so arranged that screwing in the bolt (2) produces a clearance (13) between the latter and the bolt portion (5) which more or less disappears when the bolt is unscrewed.

2. Connection according to claim 1, characterised in that the additional thread (6) runs in the opposite direction to the external thread (3).

3. Connection according to claim 1, characterised in that the additional thread (6) runs in the same direction as the external thread (3) but has a different pitch.

4. Connection according to one of claims 1 to 3, characterised in that in its longitudinal direction the bolt (2) has a blind bore (7) into which the additional thread (6) is cut, and that the bolt portion (5) is provided with a matching threaded shoulder (8).

5. Connection according to one of claims 1 to 3, characterised in that in its longitudinal direction the bolt (2) is provided with a through-hole and the additional thread (6) is cut at the end of the hole that is nearest the bolt portion (5), and that the bolt portion (5) is provided with a matching threaded shoulder (8), following on from which is a torsion bar (20) which extends as a spring through the hole and which at its free end (21) is joined to the bolt (2) via axial teeth which incorporate play.

Revendications

1. Dispositif d'assemblage vissé d'un boulon (2) pourvu d'un filetage extérieur (3) et d'une pièce (1) pourvue d'un filetage intérieur correspondant, destiné de préférence aux boulons de centrage pour éléments combustibles nucléaires, le boulon (2) étant séparé perpendiculairement à son axe longitudinal, au niveau du filetage extérieur (3), d'un demi-boulon (5) qui est relié au boulon (2) par l'intermédiaire d'un autre filetage (6) autorisant des mouvements relatifs entre le boulon (2) et le demi-boulon (5), des dispositifs étant prévus qui agissent sur le demi-boulon (5), qui autorisent, lorsque le boulon (2) est vissé dans la pièce (1), un mouvement relatif tel que l'on obtienne une continuité du filetage extérieur (3) au niveau de la jonction, et qui interdisent le desserrage du boulon dans la pièce (1) du fait d'une discontinuité du filetage extérieur (3) suite à un mouvement relatif en sens opposé intervenant au niveau de la jonction, caractérisé par le fait que les dispositifs sont constitués d'au moins un ressort (10, 14, 16, 20) placé entre le boulon (2) et le demi-boulon (5) et agissant circonférentiellement, et la jonction entre le boulon (2) et le demi-boulon (5) est réalisée de telle sorte, et le ressort est disposé de telle sorte que, lorsque le boulon (2) est vissé dans la pièce (1), un jeu (13) soit créé entre le boulon (2) et le demi-boulon (5), au niveau de la jonction, qui disparaît en grande partie lorsque le boulon (2) tend à être dévissé.

2. Dispositif d'assemblage selon la revendication 1, caractérisé par le fait que le sens de l'hélice de l'autre filetage (6) est opposé à celui du filetage extérieur (3).

3. Dispositif d'assemblage selon la revendication 1, caractérisé par le fait que le sens de l'hélice de l'autre filetage (6) est le même que celui du filetage extérieur (3), mais les pas des deux filetages sont différents.

4. Dispositif d'assemblage selon une des revendications 1 à 3, caractérisé par le fait que le boulon (2) comporte un trou borgne axial (7) dans lequel est taraudé l'autre filetage (6), et le demi-boulon (5) est pourvu d'une tige filetée (8) correspondante.

5. Dispositif d'assemblage selon une des revendications 1 à 3, caractérisé par le fait que le boulon (2) est pourvu d'un trou axial traversant, l'autre filetage (6) étant taraudé dans le trou transversant à l'extrémité juxtaposée au demi-boulon (5), et le demi-boulon (5) porte une tige filetée correspondante (8) qui se prolonge par une barre (20) de torsion, servant de ressort et traversant le trou du boulon, l'extrémité libre (21) de la barre de torsion étant reliée au boulon (2) par l'intermédiaire d'une denture axiale contenant un jeu prédéterminé.

Fig. 1

Fig. 6

Fig. 2

Fig. 5

Fig. 3

Fig. 4

43

41

42

38

37

36

40

Fig. 8

38    36    38

37    37

33    35    34

37    38

30

31    32

30

Fig. 7